# EUROPEAN PATENT APPLICATION

(11) **EP 4 756 402 A2**
(43) Date of publication of application: **10.06.2026**
(21) Application number: 25214522.2
(22) Date of filing: 10.11.2025
(51) Int. Cl.: G01N 3/06, G01N 3/08

(54) **MATERIAL TESTING SYSTEMS CONFIGURED FOR LOAD MEASUREMENT USING STRUCTURAL COMPONENT STRAIN**

(30) Priority: 06.12.2024 US 202463729030 P; 03.10.2025 US 202519349475
(71) Applicant: Illinois Tool Works Inc., Glenview IL 60025 (US)
(72) Inventor: SMALLWOOD, James B., Glenview, 60025 (US); LYLE, George, Glenview, 60025 (US)
(74) Representative: HGF

(57) **Abstract**

Disclosed example material testing systems include: a crosshead configured to be actuated to transfer testing force to a test specimen during a material test; a beam configured to hold an end of the test specimen opposite the crosshead; an actuator configured to actuate the crosshead and to apply the testing force to the test specimen; a sensor configured to measure a deflection in at least one of the crosshead or the beam; and control circuitry configured to determine a force applied by the crosshead to the test specimen based on the measured deflection.

## Description

### RELATED APPLICATIONS

The present application claims the benefit of U.S. Patent Application Serial No. 63/729,030, filed December 6, 2024, entitled "MATERIAL TESTING SYSTEMS CONFIGURED FOR LOAD MEASUREMENT USING STRUCTURAL COMPONENT STRAIN." The entirety of U.S. Patent Application Serial No. 63/729,030 is expressly incorporated herein by reference.

### TECHNICAL FIELD

The present disclosure generally relates to material testing systems and, more particularly, to material testing systems configured for load measurement using structural component strain.

### BACKGROUND

Material testing machines are used to test the properties (e.g., tensile/compressive strength) of various material specimens. The particular method of testing (a.k.a. test method) may vary from material specimen to material specimen. A test file may be used to store data related to a test method. The test data, such as load applied to the tested specimen, is measured using one or more load cells arranged in a load string with the specimen.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to material testing systems configured for load measurement using structural component strain, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the example material testing system of FIG. 1, in accordance with aspects of this disclosure.
FIG. 3 illustrates an example implementation of a strain sensor coupled to the base beam of the material testing system of FIGS. 1 and 2.
FIG. 4 illustrates an example implementation of a strain sensor integrated into the base beam of the material testing system of FIGS. 1 and 2.
FIGS. 5A and 5B illustrate example strain sensors that may be coupled to the base beam or the crosshead of FIGS. 1 and 2 to implement the strain sensor of FIG. 3.
FIG. 6 illustrates an example implementation of a strain sensor coupled between the lead screws and the crosshead of FIGS. 1 and 2.
FIG. 7 illustrates an example strain sensor that may be used to implement the strain sensors of FIG. 6 to measure force applied by the crosshead to a test specimen.
FIG. 8 illustrates an example implementation of strain sensors coupled between guide columns and the crosshead of FIGS. 1 and 2.
FIG. 9 is a flowchart representative of an example method to perform a material test using a strain sensor coupled to, or built into, the crosshead or base beam of the material testing system of FIGS. 1 and 2, or the lead screws or guide columns of the material testing system.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

Universal material testing systems refer to systems that can perform a variety of mechanical tests on a specimen. Example tests include tensile and/or compressive strength tests, torsion tests, shear tests, bend tests, tear tests, peel tests, friction tests, puncture tests, and/or tests involving other mechanical properties. Universal material testing systems place the specimen into a "load string," which typically includes the specimen and the fixtures that hold the specimen in place during the test. Conventional material testing systems measure the load(s) placed on the specimen by coupling the load string to the actuator through a load cell, and providing a measurement signal from the load cell to a monitoring system for calculation of test results. While the load cell is accurate and effective at measuring the loads on the specimen, the inclusion of the load cell in the load string requires that the load cell be sized for the expected load, can subject the load cell to breakage due to the exposed position of the load cell, and reduces the permissible specimen height for a given universal testing system.

Disclosed example material testing systems may omit the load cell from the load string by measuring the load on the test specimen using measurements of strain, deflection, and/or force in structural elements of the material testing system. Some disclosed examples involve attachment of a strain sensor to a surface of the crosshead or base beam that supports the load string, and measurement of strain or deflection on the crosshead or base beam. In some disclosed examples, the strain sensor may be integrated, rather than attached or mounted, into the structural element (e.g., a base beam, a crosshead). In still other disclosed examples, the strain, deflection, or force on vertical elements such as lead screws, guide columns, or other supporting elements, are measured to measure the force on the load string.

By measuring the load on the load string using strain or deflection in the crosshead and/or base beam, and/or force on the lead screws and/or guide columns, disclosed examples may allow for a reduction in the number of parts required for material testing systems, reduce or eliminate the risk of damage to a load cell that could require costly replacement, and/or increase the height range of specimens that can be tested in a given material testing system.

According to aspects of this disclosure, example material testing systems include: a crosshead configured to be actuated to transfer testing force to a test specimen during a material test; a beam configured to hold an end of the test specimen opposite the crosshead; an actuator configured to actuate the crosshead and to apply the testing force to the test specimen; a sensor configured to measure a deflection in at least one of the crosshead or the beam; and control circuitry configured to determine a force applied by the crosshead to the test specimen based on the measured deflection.

In some example material testing systems, the sensor is mounted to the crosshead to measure the deflection in the crosshead. In some example material testing systems, the sensor is mounted to a lateral surface of the crosshead. In some example material testing systems, the sensor is integrated into the crosshead to measure the deflection in the crosshead.

In some example material testing systems, the sensor is mounted to the beam to measure the deflection in the beam. In some example material testing systems, the beam is fixed and the crosshead moves with respect to the beam. In some example material testing systems, the sensor is configured to measure a shear deflection in the crosshead or the beam. In some example material testing systems, the sensor is integrated into the beam to measure the deflection in the beam.

In some example material testing systems, the sensor is attached to the crosshead or the beam in alignment with a direction of deflection on the crosshead or the beam when the crosshead applies the force to the test specimen. In some example material testing systems, in which the control circuitry is configured to monitor the force applied to the specimen based on the measured deflection and a displacement of the crosshead while the force is being applied to the specimen.

In some example material testing systems, the sensor includes at least one of a bending strain sensor, a capacitive strain sensor, an encoder-type strain sensor, or an optical strain sensor. In some example material testing systems, the actuator is configured to apply the testing force to the test specimen by actuating the crosshead. In some example material testing systems, the actuator is supported by at least one of the crosshead or the beam, and is configured to apply the testing force to the test specimen while the crosshead or the beam provides a counterforce.

According to some aspects of the disclosure, example material testing systems include: a crosshead configured to be actuated to transfer testing force to a test specimen during a material test; a lead screw coupled to the crosshead to drive the crosshead; an actuator configured to actuate the lead screw and to apply the testing force to the crosshead; a load cell coupled between the lead screw and the crosshead, and configured to measure a force applied by the lead screw to the crosshead; and control circuitry configured to determine a force applied by the crosshead to the test specimen based on the measured force.

In some example material testing systems, the load cell includes a donut load cell having a bore through the donut load cell through which the lead screw extends. In some example material testing systems, the load cell includes a first surface configured to be coupled to the crosshead and a second surface configured to be coupled to the lead screw. In some example material testing systems, the first surface includes a top surface of the load cell. In some example material testing systems, the first surface includes an outer circumferential surface of the load cell. In some example material testing systems, the second surface includes a bottom surface of the load cell, the bottom surface being coupled to a nut driven by the lead screw. In some example material testing systems, the second surface includes an inner circumferential surface coupled to the lead screw via bearings.

Some example material testing systems further include: a second lead screw coupled to the crosshead and configured to drive the crosshead; and a second load cell coupled between the second lead screw and the crosshead, and configured to measure a second force applied by the second lead screw to the crosshead, in which the control circuitry is configured to determine the force applied by the crosshead to the test specimen based on the measured second force. In some example material testing systems, the load cell includes slip rings configured to conduct measurement signals from the load cell to the control circuitry.

According to some aspects of the disclosure, example material testing systems include: a crosshead; a guide column coupled to the crosshead to selectively brace the crosshead; an actuator coupled to the crosshead and configured to apply the testing force to a load string; a load cell coupled between the guide column and the crosshead, and configured to measure a force applied by the crosshead to the guide column; and control circuitry configured to determine a force applied by the actuator to the test specimen based on the measured force.

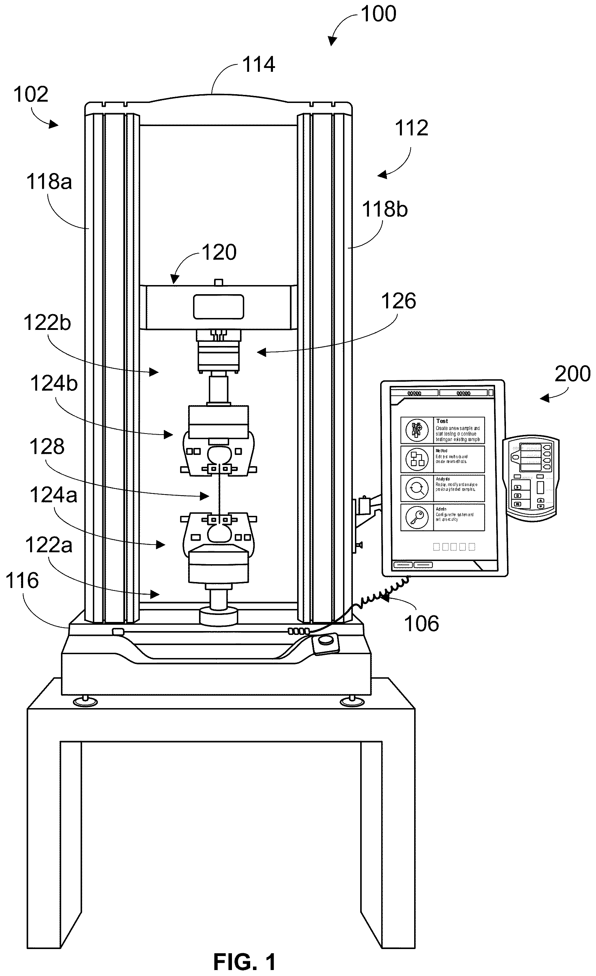

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

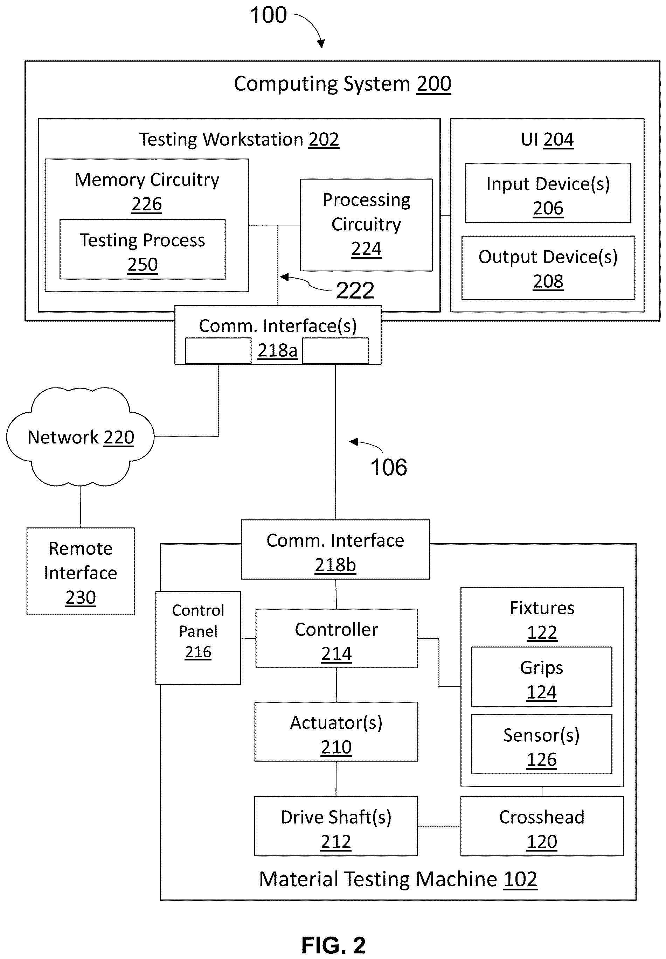

In the example of FIG. 1, the material testing machine 102 includes a frame 112. In some examples, the frame 112 provides rigid structural support for the other components of the material testing machine 102. As shown, the frame 112 comprises a top plate 114 and a bottom base beam 116 connected by two columns 118. In some examples, the columns 118 of the frame 112 may house guide rails and/or drive shafts 212 of the material testing machine 102 (see, e.g., FIG. 2). For example, the columns 118 may include two lead screws with zero, one, or more guide rails, or may include one lead screw and one or more guide rails.

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base beam 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base beam 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the material testing machine 102 may include more or fewer test sensors 126 and/or grips 124.

In the example of FIG. 1, the grips 124 are holding a test specimen 128. While shown as a (e.g., steel) rope/wire, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine 102 to a complementary workstation network interface 218a of the computing system 200. In some examples, the controller 214 may receive information (e.g., commands) from the computing system 200 through the network interfaces 218, and/or send information (e.g., measurement data from sensor(s) 126) to the computing system 200 through the workstation network interfaces 218.

In the example of FIG. 2, the computing system 200 includes a testing workstation 202 and a user interface (UI) 204 interconnected with one another. As shown, the UI 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the UI 204 may output one or more representations of a material testing process 250 configured to allow a user to setup and/or execute a test method and/or analyze test results of the test method. In some examples, the input device(s) 206 of the UI 204 may receive input from a user, and send input data representative of the user input to the testing workstation 202.

In the example of FIG. 2, the example testing workstation 202 includes workstation network interfaces 218a. As shown, one workstation network interface 218a is in communication with the network interface 218b of the material testing machine 102 through cable 106. As shown, the testing workstation 202 further includes a workstation network interface 218a in communication with a network 220 (e.g., the Internet). In the example of FIG. 2, the testing workstation 202 is in communication with a remote interface 230 through the network 220 and workstation network interface 218a. In some examples, the testing workstation 202 may be in communication with one or more other testing systems, servers, and/or other devices through the network and/or workstation network interface(s) 218a. As shown, the workstation network interfaces 218a are electrically connected to a common electrical bus 222 of the testing workstation 202.

In some examples, the testing workstation may be a computing device. In the example of FIG. 2, the testing workstation 202 includes workstation processing circuitry 224 connected to the common electrical bus 222. In some examples, the workstation processing circuitry 224 may comprise one or more processors. In some examples, the workstation processing circuitry 224 is configured to process information received from the UI 204, data importation device(s) 108, and/or material testing machine 102.

In some examples, the workstation processing circuitry 224 is configured to transmit (e.g., via network interface(s) 218a) commands and/or test parameters to the material testing machine 102. In some examples, the workstation processing circuitry 224 is configured to output information to an operator through the UI 204. In some examples, the workstation processing circuitry 224 is configured to execute machine readable instructions stored in workstation memory circuitry 226.

In the example of FIG. 2, the testing workstation 202 further includes workstation memory circuitry 226 connected to the common electrical bus 222. As shown, the workstation memory circuitry 226 includes a material testing process 250. In some examples, the material testing process 250 comprises machine readable instructions. In some examples, the workstation processing circuitry 224 is configured to execute the machine readable instructions of the material testing process 250 to communicate with (e.g., the controller 214 of) the material testing machine 102 to execute a test of a test specimen 128.

In some examples, a test of a test specimen 128 is performed (and/or its test results analyzed) according to a particular test method. In some examples, the test method is defined by the parameters of a test file. A test file may include a collection of (e.g., stored) data that is representative of one or more parameters (e.g., test parameters, sample/specimen parameters, analysis parameters, etc.) that define at least a portion of the a test method. For example, test parameters may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other relevant to a particular test method. Specimen parameters may include a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen 128. Analysis parameters may include one or more algorithms that may be used to evaluate results of the test method (and/or produce additional test results), one or more test result report format(s), and/or one or more thresholds and/or threshold ranges (e.g., by which test results may be adjudged to determine whether the specimen 128 passed or failed the test).

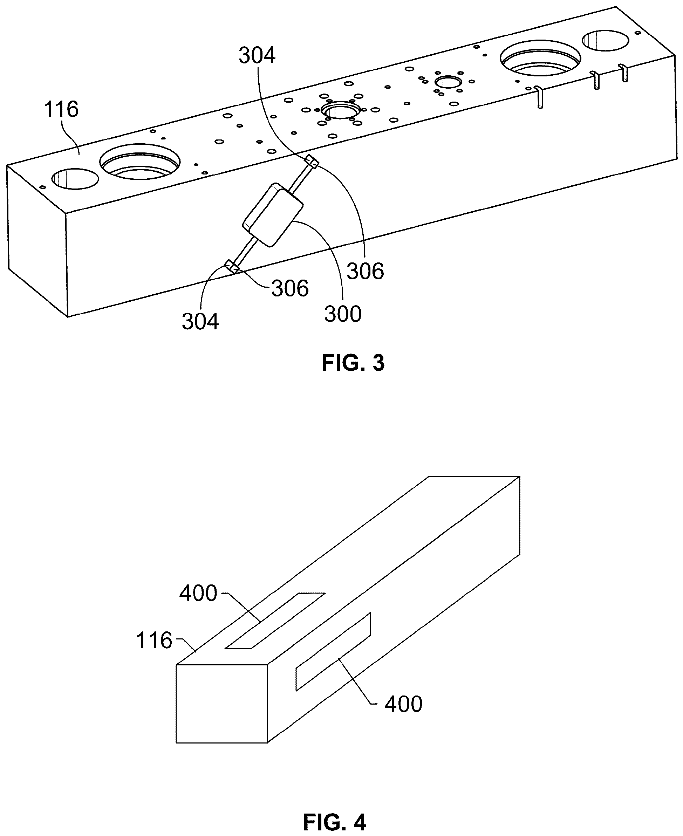

FIG. 3 illustrates an example implementation of a strain sensor 300 coupled to the base beam 116 of the material testing system 100 of FIGS. 1 and 2. The example strain sensor 300 of FIG. 3 is mounted or attached to the base beam 116 to measure strain and/or deflection in the base beam 116. The example base beam 116 is subject to strain from the exertion of force during material testing. The strain results in deflection of the base beam 116, which may be measured by the strain sensor 300. In disclosed examples, the deflection and strain measurements are captured at least partially along a length of the base beam 116 or crosshead 120, rather than solely in line with the load string as in material test systems using conventional load cells.

As illustrated in FIG. 3, the strain sensor 300 is mounted to a lateral surface of the base beam 116. For example, the strain sensor 300 may be aligned with a direction of maximum deflection experience by the base beam 116 to improve the precision and/or accuracy of strain measurements. In other examples, the strain sensor 300 is mounted in other orientations with respect to the base beam 116 and/or on other surfaces of the base beam 116.

The example strain sensor 300 is mounted to the base beam 116 using standoffs 302, to which the strain sensor 300 is mounted using screws 304 or other fasteners. However, other mounting methods may be used.

The processing circuitry 224 receives strain or deflection measurements from the strain sensor 300 and, based the strain or deflection measurements, calculates a load on the test specimen 128. To improve the accuracy of load measurement, the strain sensor 300 may be calibrated after installation. For example, after mounting the strain sensor 300 on the base beam 116, one or more loads are applied to the load string while the loads are measured with a load cell. The loads measured by the load cell and the deflection measurements measured by the strain sensor 300 are provided to the processing circuitry 224, which calculates a relationship between measured deflection and load present in the load string.

FIG. 4 illustrates an example implementation of a strain sensor 400 integrated into the base beam 116 of the material testing system 100 of FIGS. 1 and 2. The example strain sensor 400 of FIG. 4 may be similar to the strain sensor 300 of FIG. 3, except that a body 402 of the strain sensor 400 is configured to be integrated into the body of the base beam 116 (e.g., without fasteners). For example, the body of the strain sensor 400 may be directly coupled to the structure of the base beam 116, such that the deflection of the base beam 116 is directly measured by the strain sensor 400. In some examples, the structure of the base beam 116 includes surfaces to which load cells may be attached to directly measure strain or deflection on the base beam 116.

While the examples of FIGS. 3 and 4 illustrate the strain sensor 300 mounted to or integrated into the base beam 116, in other examples the strain sensor 300 may be mounted to or integrated into the crosshead 120 in a similar manner as illustrated in FIGS. 3 or 4 with respect to the base beam 116. For example, the strain sensor 300 may be mounted on a lateral surface of the crosshead 120 at a location and orientation that aligns most closely with the direction of maximum deflection in the crosshead 120 during application of force. The strain sensor 400 may be integrated into the structure of the crosshead 120 to directly measure deflection in the crosshead 120.

Example sensors that may be used to implement the strain sensors 300, 400 include bending strain sensors, capacitive strain sensors, encoder-type strain sensors, optical strain sensors, and/or any other type of strain sensor. Based on the type of sensor, the orientation of the strain sensor 300, 400 with respect to the base beam 116 or the crosshead 120 may be different to align the sensor 300, 400 with the direction of maximum deflection in the base beam 116 or the crosshead 120.

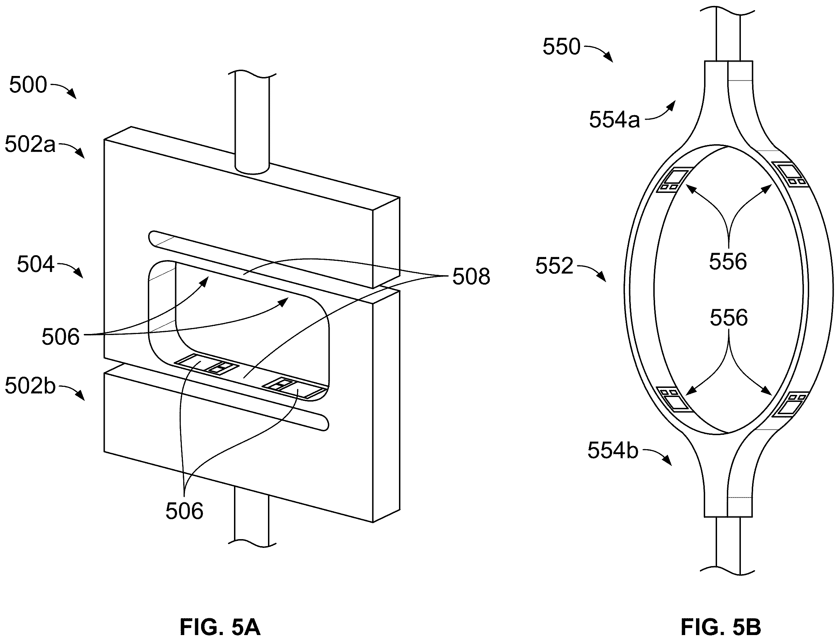

FIG. 5A illustrates an example strain sensor 500 that may be coupled to the base beam 116 or the crosshead 120 of FIGS. 1 and 2 to implement the strain sensor 300, 400 of FIG. 3. The example strain sensor 500 is an S-type strain sensor that includes end portions 502a, 502b and a central portion 504. Strain gauges 506 are coupled to the central portion 504 (e.g., onto beams 508 extending across the central portion 504 between the end portions 502a, 502b), and output a strain signal representative of tension or compression placed on a first one of the end portions 502a with respect to the other of the end portions 502b, which causes deformation of the central portion 504.

FIGS. 5B illustrates an example strain sensor 550 that may be coupled to the base beam 116 or the crosshead 120 of FIGS. 1 and 2 to implement the strain sensor 300, 400 of FIG. 3. The example strain sensor 500 is a ring-type strain sensor that includes a ring section 552 coupled between two end sections 554a, 554b. Strain sensors 556 are mounted to measure strain on the ring section 552.

The end sections 554a, 554b are coupled to the base beam 116 or the crosshead 120 such that deflection of the base beam 116 or the crosshead 120 pulls the end sections 554a, 554b apart. As the end sections 554a, 554b are pulled apart, the ring section 552 is deformed, which is measured by the strain sensors 556 and converted to a strain measurement signal. The strain sensors 556 provide the strain measurement signal to the processing circuitry 224, which determined the load on the load string as described above.

In some examples, multiple strain sensors 300, 400 may be attached or mounted to the base beam 116 or the crosshead 120 with different orientations. For example, a first strain sensor 300 may be attached to the crosshead 120 or base beam 116 in alignment with the direction of maximum deflection for tension tests, and a second strain sensor 300 may be attached to the crosshead 120 or base beam 116 in alignment with the direction of maximum deflection for compression tests. Additional strain sensors 300, 400 may be attached or mounted to the base beam 116 or the crosshead 120 for measuring deflection for other applied forces.

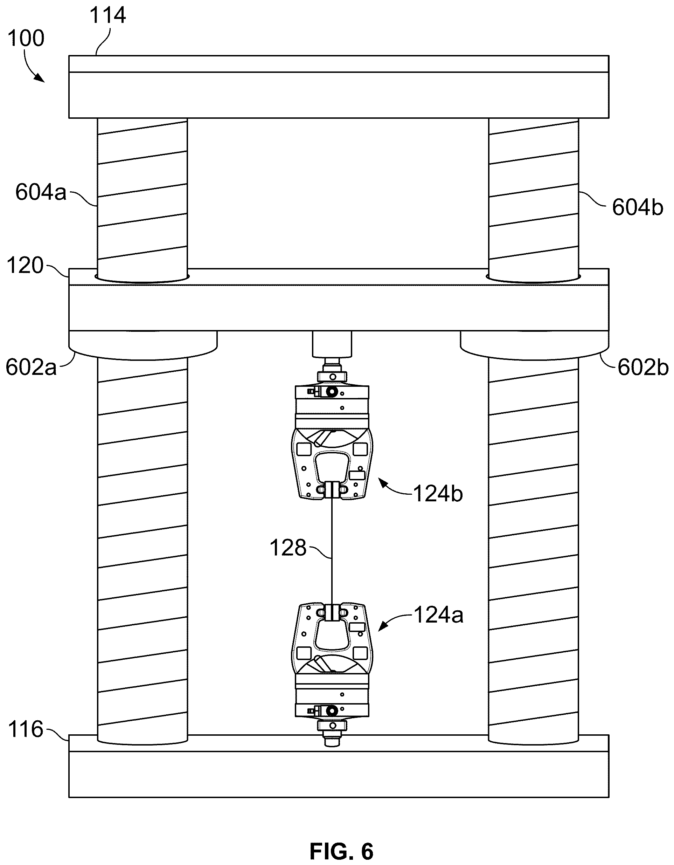

FIG. 6 illustrates an example implementation of strain sensors 602a, 602b coupled between lead screws 604a, 604b and the crosshead 120 of FIGS. 1 and 2. In the example of FIG. 6, the strain sensors 602a, 602b are coupled to the lead screws 604a, 604b, and support the crosshead 120. By driving the crosshead 120 using the strain sensors 602a, 602b, the strain sensors 602a, 602b directly measure the force applied to the crosshead 120 by the lead screws 604a, 604b and, as a result, the force applied to the load string and the test specimen 128.

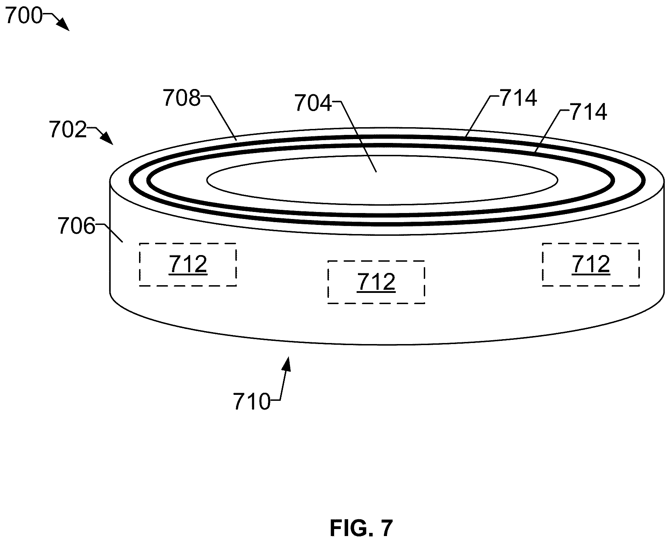

FIG. 7 illustrates an example strain sensor 700 that may be used to implement the strain sensors 602a, 602b of FIG. 6 to measure force applied by the crosshead to a test specimen. The example strain sensor 700 includes a donut-shaped body 702, having an inner circumferential surface 704, an outer circumferential surface 706, an upper surface 708, and a lower surface 710.

The example sensor 700 may be coupled to the lead screw 604a, 604b via the inner circumferential surface 704, such as via bearings (e.g., ball bearings). In other examples, the sensor 700 may be coupled to the lead screw 604a, 604b via the lower surface 710, such as by being supported or otherwise coupled to a drive nut that is coupled to the lead screw 604a, 604b.

The sensor 700 is further coupled to the crosshead 120 via the outer circumferential surface 706 and/or the upper surface 708. For example, the outer circumferential surface 706 may be coupled to an annular surface on a bottom or an interior of the crosshead 120. In other examples, a bottom surface or interior surface of the crosshead 120 may be supported by, or otherwise coupled to, the upper surface 708 of the sensor 700.

The sensor 700 further includes one or more load cells 712 coupled between a) the inner circumferential surface 704 and/or the lower surface 710 coupled to the lead screw 604a, 604b, and b) the outer circumferential surface 706 and/or the upper surface 708 coupled to the crosshead 120. The load cells 712 monitor strain and/or deflection between the crosshead 120 and the lead screw 604a, 604b. By including a strain sensor 700 between the crosshead 120 and each of the lead screws 604a, 604b that generate the force on the test specimen 128, the processing circuitry 224 can determine a total load on the test specimen.

To transfer the signal(s) from the load cell(s) 712 to the processing circuitry 224, the example sensor 700 may include slip rings 714 that allow for transfer of signals as the lead screws 604a, 604b are rotated with respect to the sensor 700. The slip rings 714 may be located on any of the inner circumferential surface 704, the outer circumferential surface 706, the upper surface 708, and/or the lower surface 710, or a combination of the surfaces 704-710, with corresponding contacts on an opposing surface of the material testing system 100 to relay the signals to the processing circuitry 224. In some examples, the raceways of the lead screws 604a, 604b may include slip rings or the contacts, with the slip rings in different raceways being electrically isolated. In such examples, the inner circumferential surface 704 of the sensor 700 includes the opposing contacts or slip rings.

In still other examples, the sensor 700 may include wireless communication circuitry to communicate the measurement signals or data to the communication circuitry (e.g., via the communication interface(s) 218a).

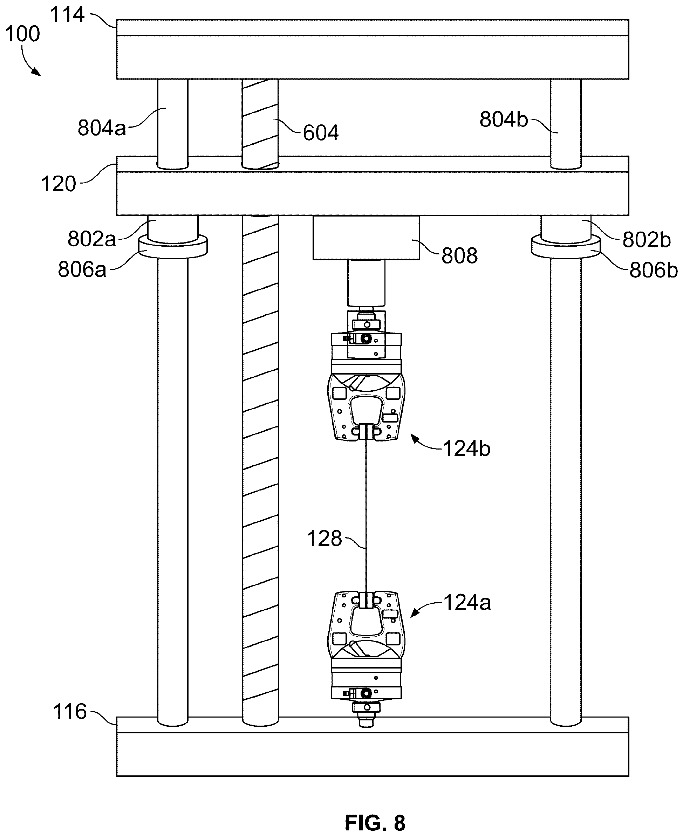

In some other examples, one or more lead screws 604 are used to move the crosshead 120 to a desired position, and the crosshead 120 is then clamped in position to allow an actuator to apply the test force to the load string using the crosshead 120 as a stationary brace beam. FIG. 8 illustrates an example implementation of strain sensors 802a, 802b coupled between guide columns 804a, 804b and the crosshead 120 of FIGS. 1 and 2. As illustrated in FIG. 8, the crosshead 120 may be clamped, locked, or otherwise secured to guide columns 804a, 804b, or another member of the columns 118a, 118b to hold the crosshead 120 at a desired position.

The strain sensors 802a, 802b may be coupled between the crosshead 120 and the post, column, or other structure providing the support. The strain sensors 802a, 802b may be implemented in a similar or identical manner to the strain sensor 700 of FIG. 7 except that, if used, the inner circumferential surface 704 may be configured to selectively clamp onto the guide columns 804a, 804b instead of or in addition to gliding over the guide columns 804a, 804b. In other examples, the strain sensors 802a, 802b may be supported (e.g., on the lower surface 710) by locking clamps 806a, 806b, which may be selectively clamped onto the guide columns 804a, 804b to support the crosshead 120 in a desired position. In such examples, the strain sensors 802a, 802b are positioned between the locking clamps 806a, 806b and the crosshead 120 to measure the strain applied by the crosshead 120 onto the guide columns 804a, 804b.

To apply force to the load string (e.g., the grips 124a, 124b or other fixtures, the test specimen 128), the example material test system 800 of FIG. 8 includes an actuator 808 coupled to the crosshead 120. The actuator 808 may be positioned on any side of the crosshead 120, provided the actuator 808 can apply force to the load string (e.g., via the grips 124a, 124b) with respect to the crosshead 120.

As the actuator 808 applies force to the load string and the crosshead 120, the strain sensors 802a, 802b measure the force or load between the crosshead 120 and the guide columns 804a, 804b, and provide measurement signals to the processing circuitry 224. The example processing circuitry 224 determines the total load applied to the test specimen 128 by the actuator 808.

In other examples, the strain sensor(s) 300, 500, 550 may be attached to the crosshead 120, and/or the strain sensor(s) 400 may be integrated into the crosshead 120, to measure the deflection of the crosshead 120 as the actuator 808 applies the force to the load string.

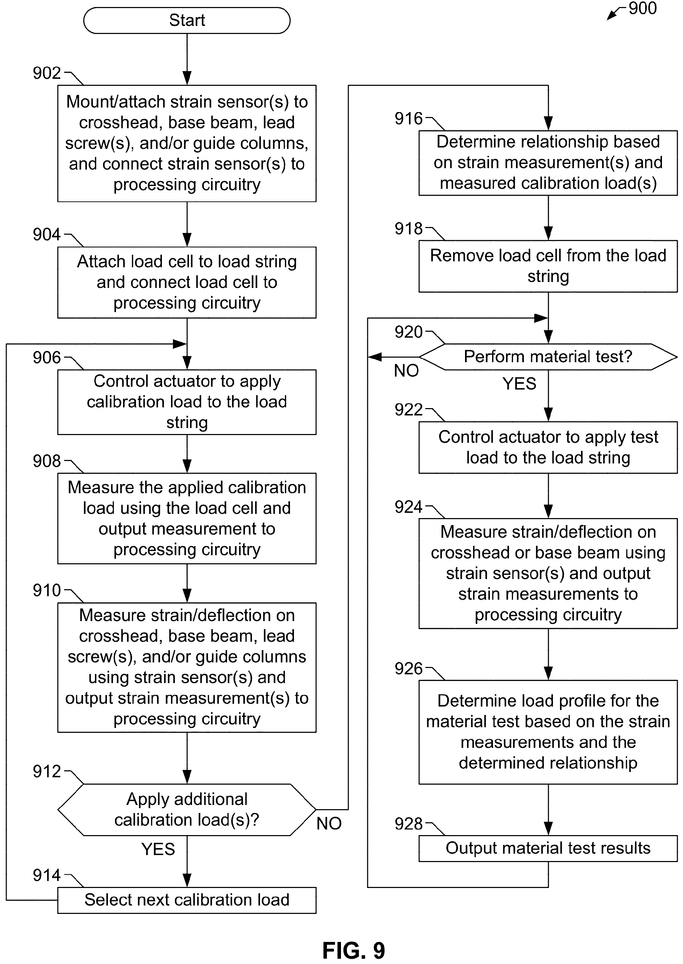

FIG. 9 is a flowchart representative of an example method 900 to perform a material test using a strain sensor coupled to, or built into, the crosshead 120 or base beam 116 of the material testing system 100 of FIGS. 1 and 2, or the lead screws 604a, 604b or guide columns 804a, 804b of the material testing system 100.

At block 902, an operator mounts or attaches one or more strain sensor(s) (e.g., the strain sensors 300, 500, 550) to the base beam 116 and/or to the crosshead 120, and/or one or more strain sensor(s) (e.g., strain sensors 602a, 602b, 700, 802a, 802b) to the lead screws 604a, 604b and/or guide columns 804a, 804b of the material testing system 100.

At block 904, the operator attaches a load cell to the load string and communicatively connects the load cell to the processing circuitry 224. For example, the operator may couple the load cell between the crosshead 120 and the grip 124b, or between the base beam 116 and the grip 124a. In other examples, the operator may couple the load cell between the grips 124a, 124b, such as by gripping the load cell with the grips 124a, 124b.

After installation of the strain sensor(s), the material testing system 100 performs a calibration procedure to establish a relationship between deflection in the base beam 116 or the crosshead 120 and the force on the load string.

At block 906, the processing circuitry 224 controls the actuator (e.g., the actuator 210, the actuator 808) to apply a calibration load to the load string. The calibration load may be a predetermined target load, and the processing circuitry 224 may store one or more calibration loads to be applied by the actuator 210, 808. At block 908, the load cell measures the applied calibration load and outputs one or more measurements to the processing circuitry 224. At block 910, the strain sensor(s) 300, 400, 500, 602a, 602b, 700, 802a, 802b also measures the strain or deflection on the crosshead 120, the base beam 116, the lead screws 604a, 604b, or the guide columns 804a, 804b, and outputs strain measurement(s) to the processing circuitry 224. The processing circuitry 224 may receive the measurement(s) from the load cell and the strain measurement(s) substantially simultaneously, and/or with timestamps that allow the processing circuitry 224 to correlate the measurements. In other examples, the calibration load is applied for a predetermined duration to allow both the load cell and the strain sensor(s) 300, 400, 500, 602a, 602b, 700, 802a, 802b to establish a corresponding measurement for comparison.

At block 912, the processing circuitry 224 determines whether to apply additional calibration loads. For example, the processing circuitry 224 may store a set of calibration loads over a desired measurement range of the material testing system 100. In some examples, the calibration loads may extend above and/or below the desired measurement range. If additional calibration load(s) are to be applied (block 912), at block 914 the processing circuitry 224 selects a next calibration load and control returns to block 906 to apply the next calibration load.

When no additional calibration load(s) are to be applied (block 912), at block 916 the processing circuitry 224 determines a relationship based on the strain measurement(s) and the measured calibration load(s). For example, the processing circuitry 224 may perform a regression or other curve-fitting based on strain measurements that correspond to calibration loads measured by the load cell. The processing circuitry 224 may store the relationship as an algorithm, a lookup table, and/or using any other format or data. At block 918, the operator removes the load cell from the load string.

At block 920, the processing circuitry 224 determines whether to perform a material test. For example, the processing circuitry 224 may receive a command to begin a material test (e.g., a tension test, a compression test, etc.) from an operator. The command may be received in conjunction with a test input and/or test parameters governing the material test. If a material test is to be performed (block 920), at block 922 the processing circuitry 224 controls the actuator 210, 808 to apply a test load to the load string. For example, the actuator 210, 808 may drive the lead screws 604a, 604b to apply force to the test specimen 128 coupled between the crosshead 120 and the base beam 116.

At block 924, the processing circuitry 224 measures the strain or deflection on the crosshead 120 or the base beam 116, or the force between the crosshead 120 and the lead screws 604a, 604b or the guide columns 804a, 804b, and outputs strain measurements to the processing circuitry 224. At block 926, based on the measured strain, deflection, or force, and based on the determined relationship, the processing circuitry 224 determines a load profile for the material test. For example, the processing circuitry 224 may convert a set (or curve) of strain, deflection, or force measurements to a corresponding set (or curve) of force measurements representative of the material test, and/or which may be equivalent to the measurements that would be output by a load cell positioned in the load string.

At block 928, the processing circuitry 224 outputs the material test results. For example, the processing circuitry 224 may display a graph of the test force via the user interface 204 (e.g., via a display), may store the material test results in the memory circuitry 226, and/or may communicate the material test results to one or more external devices via the communications interface(s) 218a. After outputting the material test results (block 928), or if the material test is not to be performed at a particular time (block 920), control returns to block 920 to determine whether to perform a material test (or another material test).

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a material testing process, and/or a material testing system such as a universal material testing system.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

While the disclosed methods and systems have been described with reference to example implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the disclosed methods and systems not be limited to the particular implementations disclosed, but that the present disclosed methods and systems will include all implementations falling within the scope of the appended claims.
Certain embodiments of the invention are described in the following clauses:
Clause 1. A material testing system, comprising:
   a crosshead configured to be actuated to transfer testing force to a test specimen during a material test;
   a beam configured to hold an end of the test specimen opposite the crosshead;
   an actuator configured to actuate the crosshead and to apply the testing force to the test specimen;
   a sensor configured to measure a deflection in at least one of the crosshead or the beam; and
   control circuitry configured to determine a force applied by the crosshead to the test specimen based on the measured deflection.
Clause 2. The material testing system as defined in clause 1, wherein the sensor is mounted to the crosshead to measure the deflection in the crosshead.
Clause 3. The material testing system as defined in clause 2, wherein the sensor is mounted to a lateral surface of the crosshead.
Clause 4. The material testing system as defined in clause 1, wherein the sensor is integrated into the crosshead to measure the deflection in the crosshead.
Clause 5. The material testing system as defined in clause 1, wherein the sensor is mounted to the beam to measure the deflection in the beam.
Clause 6. The material testing system as defined in clause 5, wherein the beam is fixed and the crosshead moves with respect to the beam.
Clause 7. The material testing system as defined in clause 1, wherein the sensor is configured to measure a shear deflection in the crosshead or the beam.
Clause 8. The material testing system as defined in clause 1, wherein the sensor is integrated into the beam to measure the deflection in the beam.
Clause 9. The material testing system as defined in clause 1, wherein the sensor is attached to the crosshead or the beam in alignment with a direction of deflection on the crosshead or the beam when the crosshead applies the force to the test specimen.
Clause 10. The material testing system as defined in clause 1, wherein the control circuitry is configured to monitor the force applied to the specimen based on the measured deflection and a displacement of the crosshead while the force is being applied to the specimen.
Clause 11. The material testing system as defined in clause 1, wherein the sensor comprises at least one of a bending strain sensor, a capacitive strain sensor, an encoder-type strain sensor, or an optical strain sensor.
Clause 12. The material testing system as defined in clause 1, wherein the actuator is configured to apply the testing force to the test specimen by actuating the crosshead.
Clause 13. The material testing system as defined in clause 1, wherein the actuator is supported by at least one of the crosshead or the beam, and is configured to apply the testing force to the test specimen while the crosshead or the beam provides a counterforce.
Clause 14. A material testing system, comprising:
   a crosshead configured to be actuated to transfer testing force to a test specimen during a material test;
   a lead screw coupled to the crosshead to drive the crosshead;
   an actuator configured to actuate the lead screw and to apply the testing force to the crosshead;
   a load cell coupled between the lead screw and the crosshead, and configured to measure a force applied by the lead screw to the crosshead; and
   control circuitry configured to determine a force applied by the crosshead to the test specimen based on the measured force.
Clause 15. The material testing system as defined in clause 14, wherein the load cell comprises a donut load cell having a bore through the donut load cell through which the lead screw extends.
Clause 16. The material testing system as defined in clause 15, wherein the load cell comprises a first surface configured to be coupled to the crosshead and a second surface configured to be coupled to the lead screw.
Clause 17. The material testing system as defined in clause 16, wherein the first surface comprises a top surface of the load cell.
Clause 18. The material testing system as defined in clause 16, wherein the first surface comprises an outer circumferential surface of the load cell.
Clause 19. The material testing system as defined in clause 16, wherein the second surface comprises a bottom surface of the load cell, the bottom surface being coupled to a nut driven by the lead screw.
Clause 20. The material testing system as defined in clause 16, wherein the second surface comprises an inner circumferential surface coupled to the lead screw via bearings.
Clause 21. The material testing system as defined in clause 14, further comprising:
   a second lead screw coupled to the crosshead and configured to drive the crosshead; and
   a second load cell coupled between the second lead screw and the crosshead, and configured to measure a second force applied by the second lead screw to the crosshead, wherein the control circuitry is configured to determine the force applied by the crosshead to the test specimen based on the measured second force.
Clause 22. The material testing system as defined in clause 14, wherein the load cell comprises slip rings configured to conduct measurement signals from the load cell to the control circuitry.
Clause 23. A material testing system, comprising:
   a crosshead;
   a guide column coupled to the crosshead to selectively brace the crosshead;
   an actuator coupled to the crosshead and configured to apply the testing force to a load string;
   a load cell coupled between the guide column and the crosshead, and configured to measure a force applied by the crosshead to the guide column; and
   control circuitry configured to determine a force applied by the actuator to the test specimen based on the measured force.

## Claims

1. A material testing system, comprising:
a crosshead configured to be actuated to transfer testing force to a test specimen during a material test;
a beam configured to hold an end of the test specimen opposite the crosshead;
an actuator configured to actuate the crosshead and to apply the testing force to the test specimen;
a sensor configured to measure a deflection in at least one of the crosshead or the beam; and
control circuitry configured to determine a force applied by the crosshead to the test specimen based on the measured deflection.

2. The material testing system as defined in claim 1, wherein the sensor is mounted to the crosshead to measure the deflection in the crosshead, or
wherein the sensor is integrated into the crosshead to measure the deflection in the crosshead.

3. The material testing system as defined in claim 1 or claim 2, wherein the sensor is mounted to the beam to measure the deflection in the beam, and optionally
wherein the beam is fixed and the crosshead moves with respect to the beam.

4. The material testing system as defined in any one of claims 1 to 3, wherein the sensor is configured to measure a shear deflection in the crosshead or the beam, and/or
wherein the sensor is integrated into the beam to measure the deflection in the beam.

5. The material testing system as defined in any one of claims 1 to 4, wherein the sensor is attached to the crosshead or the beam in alignment with a direction of deflection on the crosshead or the beam when the crosshead applies the force to the test specimen.

6. The material testing system as defined in any one of claims 1 to 5, wherein the control circuitry is configured to monitor the force applied to the specimen based on the measured deflection and a displacement of the crosshead while the force is being applied to the specimen.

7. The material testing system as defined in any one of claims 1 to 6, wherein the sensor comprises at least one of a bending strain sensor, a capacitive strain sensor, an encoder-type strain sensor, or an optical strain sensor.

8. The material testing system as defined in any one of claims 1 to 7, wherein the actuator is configured to apply the testing force to the test specimen by actuating the crosshead, and/or
wherein the actuator is supported by at least one of the crosshead or the beam, and is configured to apply the testing force to the test specimen while the crosshead or the beam provides a counterforce.

9. A material testing system, comprising:
a crosshead configured to be actuated to transfer testing force to a test specimen during a material test;
a lead screw coupled to the crosshead to drive the crosshead;
an actuator configured to actuate the lead screw and to apply the testing force to the crosshead;
a load cell coupled between the lead screw and the crosshead, and configured to measure a force applied by the lead screw to the crosshead; and
control circuitry configured to determine a force applied by the crosshead to the test specimen based on the measured force.

10. The material testing system as defined in claim 9, wherein the load cell comprises a donut load cell having a bore through the donut load cell through which the lead screw extends.

11. The material testing system as defined in claim 10, wherein the load cell comprises a first surface configured to be coupled to the crosshead and a second surface configured to be coupled to the lead screw.

12. The material testing system as defined in claim 11, wherein the second surface comprises a bottom surface of the load cell, the bottom surface being coupled to a nut driven by the lead screw, and/or
wherein the second surface comprises an inner circumferential surface coupled to the lead screw via bearings.

13. The material testing system as defined in any one of claims 9 to 12, further comprising:
a second lead screw coupled to the crosshead and configured to drive the crosshead; and
a second load cell coupled between the second lead screw and the crosshead, and configured to measure a second force applied by the second lead screw to the crosshead, wherein the control circuitry is configured to determine the force applied by the crosshead to the test specimen based on the measured second force.

14. The material testing system as defined in any one of claims 9 to 13, wherein the load cell comprises slip rings configured to conduct measurement signals from the load cell to the control circuitry.

15. A material testing system, comprising:
a crosshead;
a guide column coupled to the crosshead to selectively brace the crosshead;
an actuator coupled to the crosshead and configured to apply the testing force to a load string;
a load cell coupled between the guide column and the crosshead, and configured to measure a force applied by the crosshead to the guide column; and
control circuitry configured to determine a force applied by the actuator to the test specimen based on the measured force.
